# EUROPÄISCHE PATENTSCHRIFT

(11) **EP 2 738 435 B1**
(45) Veröffentlichungstag und Bekanntmachung des Hinweises auf die Patenterteilung: **24.06.2015**
(21) Anmeldenummer: 12194662.8
(22) Anmeldetag: 28.11.2012
(51) Int. Cl.: F16L 33/22, B23P 11/00, B29D 23/00, F02M 55/00

(54) **Kraftfahrzeugaggregat und Verfahren zur Herstellung eines Kraftfahrzeugaggregates**
Motor vehicle unit and method for producing a motor vehicle unit
Agrégat de véhicule automobile et procédé de fabrication d'un agrégat de véhicule automobile

(43) Veröffentlichungstag der Anmeldung: 04.06.2014
(73) Patentinhaber: TI Automotive (Fuldabrück) GmbH, 34277 Fuldabrück (DE)
(72) Erfinder: Barthel, Iris, 34270 Schauenburg (DE); Bol, Alexander, 34225 Baunatal, Guntershausen (DE); Jensen, Hans, 73265 Dettingen unter Teck (DE)
(74) Vertreter: Rohmann, Michael

(56) Entgegenhaltungen:
- EP-A1- 1 267 113
- DE-C1- 4 304 680

## Beschreibung

Die Erfindung betrifft ein Kraftfahrzeugaggregat aus einem Verbinder - insbesondere Schnellverbinder - und einer Kraftfahrzeugrohrleitungwobei der Verbinder ein Einschubende zum Einschieben der Rohrleitung aufweist, wobei an dem Einschubende ein Sicherungsdorn vorhanden ist, der von einer Außenhülse umgeben ist und wobei zwischen Sicherungsdorn und Außenhülse ein Einschubringraum für die Rohrleitung bzw. für ein Rohrleitungsende der Rohrleitung angeordnet ist. Die Erfindung betrifft weiterhin ein Verfahren zur Herstellung eines Kraftfahrzeugaggregates aus einem Verbinder - insbesondere Schnellverbinder - und einer Kraftfahrzeugrohrleitung. - Kraftfahrzeugrohrleitung meint eine Rohrleitung für fluide Medien in einem Kraftfahrzeug, insbesondere für Kraftstoffe, für Bremsflüssigkeiten oder beispielsweise für eine Harnstofflösung für ein Katalysatorsystem des Kraftfahrzeuges.

Ein Kraftfahrzeugaggregat der eingangs genannten Art ist aus EP 1 267 113 A1 bekannt. Die Funktionssicherheit dieses bekannten Kraftfahrzeugaggregates lässt aber vor allem bei höheren Drücken und höheren Temperaturen zu wünschen übrig.

Aus der Praxis sind weiterhin Kraftfahrzeugaggregate in unterschiedlichen Ausführungsformen bekannt. So ist es bekannt, Kraftfahrzeugrohrleitungen aus Kunststoff, beispielsweise aus Polyamid 12, mit einem Verbinder bzw. Schnellverbinder zu verbinden, indem die Rohrleitung kraftschlüssig bzw. reibschlüssig in einen Eingriffsabschnitt des Verbinders eingreift. Es ist auch bereits bekannt, den Eingriffsabschnitt des Verbinders für eine bessere Fixierung der Rohrleitung mit Sicherheitsprofilierungen zu versehen. Viele der bekannten Kraftfahrzeugaggregate weisen aber den Nachteil auf, dass die Rohrleitung bei höheren Drücken und/oder bei höheren Temperaturen nicht mehr ausreichend funktionssicher und effektiv an dem Verbinder fixiert ist. Die Verwendung von Schlauchklemmen oder dergleichen zur Verbesserung der Fixierung ist aufwendig bzw. kostenaufwendig und bringt geometrische Einschränkungen mit sich. - Viele bekannte Kraftfahrzeugaggregate weisen fernerhin den Nachteil auf, dass die mit dem Verbinder verbundenen Rohrleitungsenden relativ ungeschützt gegenüber fluiden Medien, insbesondere korrosiven fluiden Medien, beispielsweise gegenüber Spritzwasser sind.

Demgegenüber liegt der Erfindung das technische Problem zugrunde, ein Kraft-fahrzeugaggregat der eingangs genannten Art anzugeben, bei dem die vorstehend beschriebenen Nachteile effektiv vermieden werden können. Fernerhin liegt der Erfindung das technische Problem zugrunde, ein Verfahren zur Herstellung eines solchen Kraftfahrzeugaggregates anzugeben.

Zur Lösung des technischen Problems lehrt die Erfindung ein Kraftfahrzeugaggregat, welches dadurch gekennzeichnet ist, dass die Außenhülse über zumindest ein Sollbruchelement mit dem Sicherungsdorn verbunden ist, wobei das zumindest eine Sollbruchelement mit der Maßgabe eingerichtet ist, dass es beim Aufschieben des Rohrleitungsendes auf den Sicherungsdorn bzw. beim Einschieben des Rohrleitungsendes in den Einschubringraum bricht bzw. reißt, so dass die Außenhülse von bzw. mit der eingeschobenen Rohrleitung auf den Sicherungsdorn bzw. weiter auf den Sicherungsdorn aufschiebbar ist.

Die Kraftfahrzeugrohrleitung wird nachfolgend auch kurz als Rohrleitung bezeichnet. Rohrleitung meint im Übrigen auch einen an den Verbinder anzuschließenden Schlauch. Zweckmäßigerweise ist die Rohrleitung im Querschnitt kreisförmig bzw. im Wesentlichen kreisförmig ausgebildet. Im Rahmen der Erfindung wird die Rohrleitung auf den Sicherungsdorn des Verbinders aufgeschoben, so dass sie vorzugsweise im vollständig aufgeschobenen Zustand kraftschlüssig bzw. reibschlüssig zwischen Sicherungsdorn und Außenhülse gehalten wird. Es liegt im Rahmen der Erfindung, dass die Außenhülse zylinderförmig bzw. im Wesentlichen zylinderförmig ausgebildet ist. Es liegt weiterhin im Rahmen der Erfindung, dass der Sicherungsdorn innen hohl zur Durchleitung des fluiden Mediums ausgestaltet ist. Vorzugsweise besteht der Verbinder bzw. Schnellverbinder aus Kunststoff bzw. im Wesentlichen aus Kunststoff besteht. Das zumindest eine Sollbruchelement bildet bei der erfindungsgemäßen Erfindung eine Sollbruchstelle, die gezielt aufgebrochen bzw. aufgerissen werden soll.

Es liegt im Rahmen der Erfindung, dass der erfindungsgemäße Verbinder ein Schnellverbinder ist. Empfohlenermaßen weist der Verbinder bzw. Schnellverbinder einen Anschlussabschnitt auf, der mit einer Steckelementaufnahmeöffnung zur Aufnahme eines Steckelementes ausgestattet ist. Gemäß bevorzugter Ausführungsform weist die Steckelementaufnahmeöffnung zumindest einen Rastvorsprung bzw. Rastvorsprünge auf, welcher Rastvorsprung bzw. welche Rastvorsprünge von zumindest einem Vorsprungelement an der Außenoberfläche des Steckelementes hintergreifbar ist/sind. Zweckmäßigerweise ist das Vorsprungelement an dem Steckelement in Form einer ringförmigen Stauchung bzw. in Form eines ringförmigen Vorsprunges ausgebildet. Im angeschlossenen Zustand hintergreift dann diese Stauchung bzw. dieser Vorsprung einen Rastvorsprung bzw. Rastvorsprünge in der Steckelementaufnahmeöffnung des Verbinders bzw. Schnellverbinders. Bei dem Steckelement handelt es sich insbesondere um ein Anschlusselement für eine weitere Rohrleitung.

Nach einer besonders bevorzugten Ausführungsform der Erfindung weist der Sicherungsdorn an seiner Außenoberfläche zumindest eine Sicherungsprofilierung, vorzugsweise mehrere Sicherungsprofilierungen auf. Es liegt dabei im Rahmen der Erfindung, dass die Rohrleitung kraftschlüssig bzw. reibschlüssig auf die Sicherungsprofilierung bzw. auf die Sicherungsprofilierungen aufschiebbar ist. Zweckmäßigerweise wird die Rohrleitung bzw. wird das Rohrleitungsende zumindest im vollständig aufgeschobenen Zustand zwischen dem Sicherungsdorn bzw. zwischen der zumindest einen Sicherungsprofilierung und der Außenhülse im Einschubringraum eingeklemmt bzw. kraftschlüssig/reibschlüssig gehalten. Empfohlenermaßen wird in diesem Zustand eine relative Drehung von Verbinder und Rohrleitung blockiert. Im montierten Zustand bzw. im vollständig aufgeschobenen Zustand liegt/liegen zumindest im Bereich der Außenhülse die Sicherungsprofilierung bzw. die Sicherungsprofilierungen unmittelbar an der Innenoberfläche der Rohrleitung an. Es liegt im Rahmen der Erfindung, dass die Sicherungsprofilierung bzw. die Sicherungsprofilierungen über den Außenumfang des Sicherungsdornes umlaufen. Nach einer bevorzugten Ausführungsform der Erfindung sind zumindest zwei Sicherungsprofilierungen in Längsrichtung des Sicherungsdorns hintereinander angeordnet.

Es liegt im Rahmen der Erfindung, dass die Außenhülse zunächst am rohrleitungsseitigen Stirnende des Sicherungsdornes angeordnet ist. Dabei ist die Außenhülse über zumindest ein Sollbruchelement mit dem Sicherungsdorn verbunden. Es liegt weiterhin im Rahmen der Erfindung, dass das zumindest eine Sollbruchelement am anschlussabschnittseitigen Stirnende der Außenhülse angeordnet ist. Zweckmäßigerweise ist das zumindest eine Sollbruchelement unmittelbar an dem anschlussabschnittseitigen Stirnende der Außenhülse angeordnet bzw. ist das Sollbruchelement Bestandteil dieses Stirnendes. Nach einer Ausführungsform der Erfindung läuft das zumindest eine Sollbruchelement über den Innenumfang der Außenhülse bzw. über den Außenumfang des Sicherungsdornes um. Es liegt aber auch im Rahmen der Erfindung, dass mehrere über den Innenumfang der Außenhülse umlaufende Sollbruchelemente vorgesehen sind.

Gemäß besonders empfohlener Ausführungsform der Erfindung weist die Außenhülse einen anschlussabschnittseitigen Pressflansch auf, gegen das Stirnende der Rohrleitung beim Aufschieben auf den Sicherungsdorn bzw. beim weiteren Aufschieben drückt, so dass die Außenhülse mit der Rohrleitung auf den Sicherungsdorn aufschiebbar ist bzw. weiter aufschiebbar ist. Beim Aufschieben auf den Sicherungsdorn schiebt die Rohrleitung zweckmäßigerweise also die Außenhülse vor sich her. Vorzugsweise läuft der Pressflansch der Außenhülse über den Innenumfang der Außenhülse um. Es ist aber auch möglich, dass einzelne durch Lücken unterbrochene Flanschabschnitte über den Innenumfang der Außenhülse verteilt sind. Es empfiehlt sich, dass das zumindest eine Sollbruchelement sicherungsdornseitig am Pressflansch angeschlossen ist bzw. dass ein nach dem Brechen des Sollbruchelementes verbleibender Rest des Sollbruchelementes sicherungsdornseitig am Pressflansch angeschlossen ist.

Eine sehr bevorzugte Ausführungsform der Erfindung ist dadurch gekennzeichnet, dass die Außenhülse nach dem Aufschieben auf den Sicherungsdorn bzw. nach dem vollständigen Aufschieben auf den Sicherungsdorn mit ihrem Stirnende an einem Anschlagflansch des Verbinders anliegt. Es liegt somit im Rahmen der Erfindung, dass die Außenhülse beim vollständigen Aufschieben auf den Sicherungsdorn mit ihrem anschlussabschnittseitigen Stirnende an dem Anschlagflansch zur Anlage kommt. Zweckmäßigerweise läuft der Anschlagflansch über den Außenumfang des Verbinders um. Vorzugsweise ist die Anschlagfläche dieses Anschlagflansches senkrecht bzw. im Wesentlichen senkrecht zur Längsachse L des Verbinders orientiert. Empfohlenermaßen ist die Stirnendfläche des anschlussabschnittseitigen Stirnendes der Außenhülse senkrecht bzw. im Wesentlichen senkrecht zur Längsachse L des Verbinders angeordnet. Es liegt im Rahmen der Erfindung, dass der Anschlagflansch des Verbinders am anschlussabschnittseitigen Ende des Sicherungsdornes angeordnet ist.

Nach empfohlener Ausführungsform der Erfindung, weist der Sicherungsdorn einen Konusabschnitt auf, wobei sich der Konus des Konusabschnittes zum rohrleitungsseitigen Stirnende des Sicherungsdornes hin verjüngt. Zweckmäßigerweise ist die Außenhülse kraftschlüssig bzw. reibschlüssig auf den Konusabschnitt aufschiebbar. Es empfiehlt sich, dass die Außenhülse insbesondere am Ende des Aufschiebevorgangs auf den Konusabschnitt des Sicherungsdornes gleichsam aufgeklemmt wird. Es liegt im Rahmen der Erfindung, dass der Konusabschnitt des Sicherungsdornes in Aufschieberichtung der Außenhülse bzw. der Rohrleitung vor dem Anschlagflansch des Verbinders angeordnet ist. Zweckmäßigerweise ist die Außenhülse mit ihrem Pressflansch auf den Konusabschnitt des Sicherungsdornes kraftschlüssig bzw. reibschlüssig aufschiebbar. Empfohlenermaßen liegt der Pressflansch nach dem Aufschieben bzw. vollständigen Aufschieben unter Druck bzw. unter Vorspannung auf dem Konus des Konusabschnittes auf. Vorzugsweise liegt nach dem Aufschieben bzw. nach dem vollständigen Aufschieben der Außenhülse ein Stirnende der Rohrleitung an dem Pressflansch der Außenhülse an. Aufgrund dieses dichtenden Anliegens wird das Rohrleitungsende effektiv gegen äußere Einflüsse, wie z. B. gegen Spritzwasser geschützt.

Eine besonders empfohlene Ausführungsform der Erfindung ist dadurch gekennzeichnet, dass die zumindest eine Sicherungsprofilierung des Sicherungsdornes einen konusförmigen Abschnitt aufweist bzw. dass die mehreren Sicherungsprofilierungen jeweils einen konusförmigen Abschnitt aufweisen. Zweckmäßigerweise verjüngt sich der entsprechende Konus des konusförmigen Abschnittes zum rohrleitungsseitigen Stirnende des Sicherungsdornes hin. Diese bevorzugte Ausführungsform des konusförmigen Abschnittes erleichtert das Aufschieben der Rohrleitung auf den Sicherungsdorn bzw. das Aufschieben gegen die Außenhülse. Gemäß einer empfohlenen Ausführungsform der Erfindung ist die zumindest eine Sicherungsprofilierung bzw. sind die Sicherungsprofilierungen sägezahnförmig ausgebildet.

Es liegt im Rahmen der Erfindung, dass die Außenhülse vor dem Aufschieben der Rohrleitung einstückig über das zumindest eine Sollbruchelement mit dem Sicherungsdorn verbunden ist. Zweckmäßigerweise sind Außenhülse und Sicherungsdorn als einstückiges Spritzgussteil ausgebildet. Es empfiehlt sich, dass die Außenhülse über das zumindest eine Sollbruchelement mit dem Sicherungsdorn bzw. mit dem Verbinder vergossen ist. Wenn die Rohrleitung auf den Sicherungsdorn aufgeschoben wird, bricht zweckmäßigerweise das zumindest eine Sollbruchelement.

Es liegt weiterhin im Rahmen der Erfindung, dass zumindest ein inneres Basisteil des Verbinders - insbesondere mit dem Anschlussabschnitt, mit dem Sicherungsdorn und mit der Anschlusshülse als ein einziges Kunststoffteil und insbesondere als ein einziges Spritzgussteil ausgebildet ist. Grundsätzlich kann es sich bei dem Basisteil um den gesamten Verbinder handeln. Es ist jedoch auch möglich, dass das Basisteil des Verbinders mit einem Kunststoff umspritzt wird und/oder von einem Gehäuse umgeben wird. Empfohlenermaßen weist das Basisteil des Verbinders einen Mittelabschnitt auf bzw. einen zwischen dem Anschlussabschnitt und dem Sicherungsdorn angeordneten Mittelabschnitt auf.

Gegenstand der Erfindung ist auch ein Verfahren zur Herstellung eines Kraftfahrzeugaggregates aus einem Verbinder - insbesondere aus einem Schnellverbinder - und einer Kraftfahrzeugrohrleitung, wobei ein Basisteil des Verbinders mit einem Sicherungsdorn an einem Einschubende und mit einer den Sicherungsdorn umgebenden und über zumindest ein Sollbruchelement an den Sicherungsdorn angeschlossenen Außenhülse hergestellt wird, wobei ein Rohrleitungsende der Rohrleitung in einen zwischen Außenhülse und Sicherungsdorn ausgebildeten Einschubringraum eingeschoben wird, so dass das zumindest eine Sollbruchelement bricht und wobei anschließend das Aggregat aus Rohrleitung bzw. Rohrleitungsende und Außenhülse auf den Sicherungsdorn bzw. weiter auf den Sicherungsdorn aufgeschoben wird. Es liegt im Rahmen der Erfindung, dass das Basisteil des Verbinders durch ein Spritzgussverfahren hergestellt wird.

Der Erfindung liegt die Erkenntnis zugrunde, dass bei dem erfindungsgemäßen Kraftfahrzeugaggregat eine sehr funktionssichere und effektive Fixierung der Kraftfahrzeugrohrleitung an dem Verbinder möglich ist. Diese Verbindung ist auch resistent gegenüber höheren Drücken und/oder höheren Temperaturen. Das erfindungsgemäße Kraftfahrzeugaggregat lässt sich auf einfache, wenig aufwendige und insbesondere auch wenig kostenaufwendige Weise realisieren. Die Erfindung weist weiterhin den Vorteil auf, dass Partikel, die bei der Herstellung der Verbindung zwischen dem Verbinder und dem Rohrleitungsende entstehen, in dem Zwischenraum zwischen der Außenhülse und dem Sicherungsdorn festgehalten werden und somit das System bzw. das Aggregat nicht verunreinigen. Fernerhin wird das mit dem Verbinder verbundene Rohrleitungsende nicht der Umgebung bzw. nicht Umgebungseinflüssen ausgesetzt und wird vielmehr dicht im Zwischenraum zwischen Außenhülse und Sicherungsdorn aufgenommen. Insoweit wird für das Rohrleitungsende auch ein Spritzwasserschutz gegen Salzwasser oder dergleichen verwirklicht. Die erfindungsgemäße Ausgestaltung des Kraftfahrzeugaggregates bietet auch eine effektive Kontrollfunktion dahingehend, ob die Rohrleitung vollständig auf den Sicherungsdorn aufgeschoben ist. Bei vollständiger bzw. formschlüssiger Anlage des anschlussabschnittseitigen Stirnendes der Außenhülse an dem Anschlagflansch des Verbinders kann davon ausgegangen werden, dass die Rohrleitung vollständig aufgeschoben ist und somit die Verbindung funktionssicher und effektiv hergestellt wurde.

Nachfolgend wird die Erfindung anhand einer lediglich ein Ausführungsbeispiel darstellenden Zeichnung näher erläutert. Es zeigen in schematischer Darstellung:
- Fig. 1: ein erfindungsgemäßes Kraftfahrzeugaggregat in einer ersten Funktionsstellung,
- Fig. 2: den Gegenstand nach Fig. 1 in einer zweiten Funktionsstellung,
- Fig. 3: den Gegenstand gemäß Fig. 1 in einer dritten Funktionsstellung und
- Fig. 4: den Gegenstand der Fig. 1 in einer vierten Funktionsstellung.

Die Figuren zeigen ein erfindungsgemäßes Kraftfahrzeugaggregat aus einem Schnellverbinder 1 und einer Kraftfahrzeugrohrleitung 2. Der Schnellverbinder 1 weist ein Einschubende 3 zum Einschieben der Rohrleitung 2 auf. An der gegenüberliegenden Seite dieses Einschubendes 3 ist vorzugsweise und im Ausführungsbeispiel ein Anschlussabschnitt 8 des Schnellverbinders 1 angeordnet, der mit einer Steckelementaufnahmeöffnung 9 zur Aufnahme eines Steckelementes 10 ausgestattet ist. Die Steckelementaufnahmeöffnung 9 weist bevorzugt und im Ausführungsbeispiel Rastvorsprünge 11 auf, wobei die Rastvorsprünge 11 von einem in Form einer ringförmigen Stauchung ausgebildeten Vorsprungelement 12 an der Außenoberfläche des Steckelementes 10 hintergreifbar sind. An dem Einschubende 3 des Schnellverbinders 1 ist ein Sicherungsdorn 4 vorhanden, der von einer Außenhülse 5 umgeben ist. Zwischen dem Sicherungsdorn 4 und der Außenhülse 5 ist ein Einschubringraum 6 zum Einschieben der Rohrleitung 2 bzw. des Rohrleitungsendes der Rohrleitung 2 angeordnet.

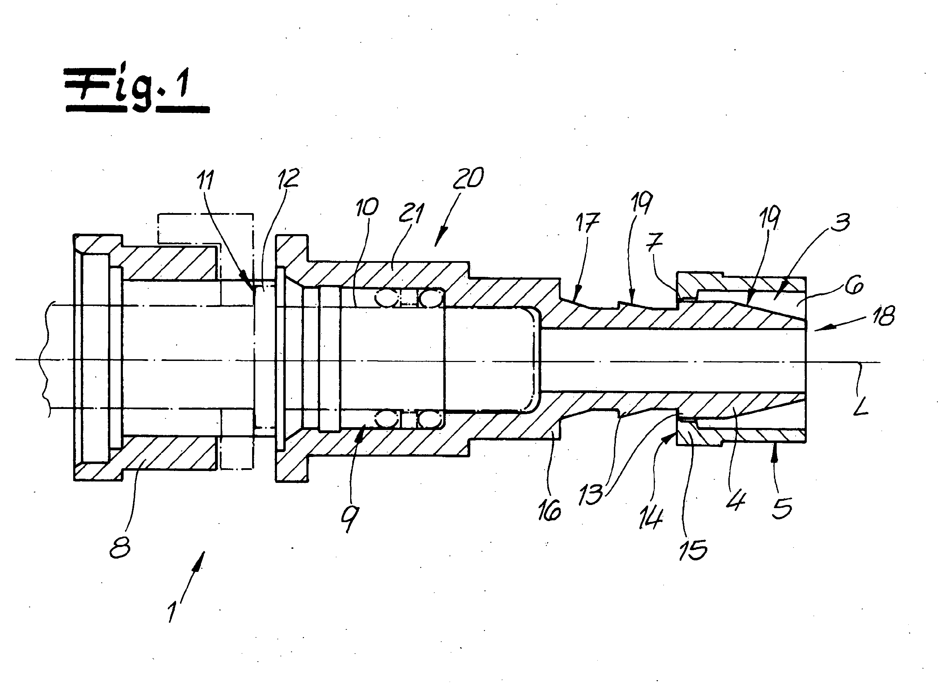

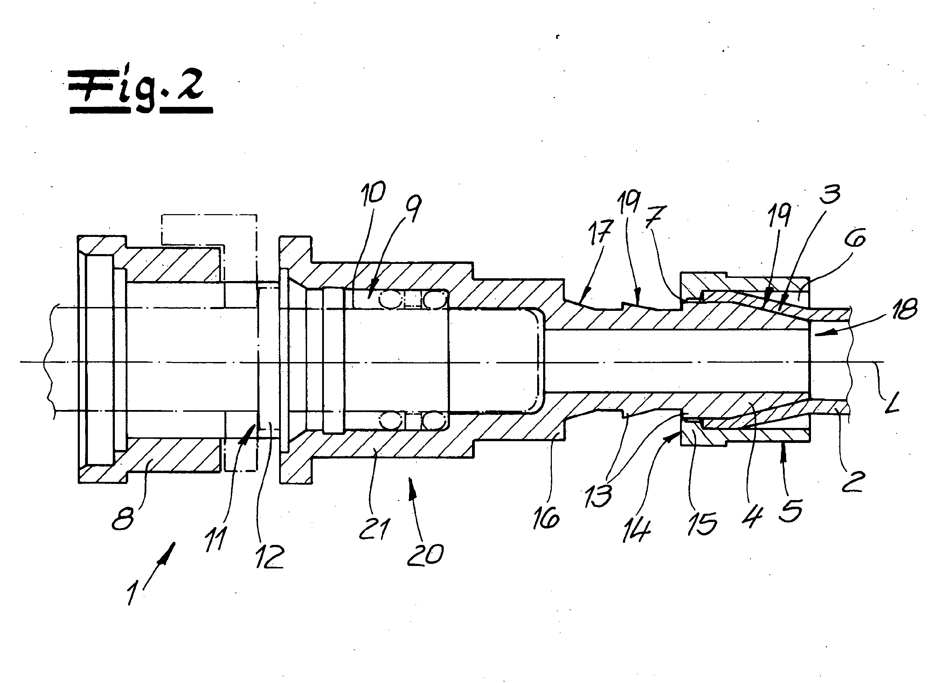

Die Fig. 1 zeigt den Schnellverbinder 1 mit noch nicht eingeschobener Rohrleitung 2. Die Außenhülse 5 ist zweckmäßigerweise und im Ausführungsbeispiel zylinderförmig ausgebildet und läuft bevorzugt und im Ausführungsbeispiel über den Außenumfang des Schnellverbinders 1 bzw. des Sicherungsdorns 4 um. Empfohlenermaßen und im Ausführungsbeispiel ist die Außenhülse 5 im noch nicht eingeschobenen Zustand der Rohrleitung 2 über ein Sollbruchelement 7 mit dem Sicherungsdorn 4 verbunden. Bevorzugt und im Ausführungsbeispiel handelt es sich bei dem Sollbruchelement 7 um ein ringförmiges Sollbruchelement 7, das zweckmäßigerweise über den gesamten Umfang des Sicherungsdorns 4 umläuft. Das Sollbruchelement 7 besteht empfohlenermaßen und im Ausführungsbeispiel wie die Außenhülse 5 und der Sicherungsdorn 4 aus Kunststoff. Das Sollbruchelement 7 ist mit der Maßgabe eingerichtet, dass es beim Einschieben der Rohrleitung 2 in den Einschubringraum 6 bricht bzw. reißt, so dass dann die Außenhülse 5 von bzw. mit der eingeschobenen Rohrleitung 2 weiter auf den Sicherungsdorn 4 aufgeschoben werden kann. Das ist insbesondere einer vergleichenden Betrachtung der Fig. 2 bis 4 entnehmbar.

Der Fig. 1 ist im Übrigen entnehmbar, dass vor dem Einschieben der Rohrleitung 2 das Sollbruchelement 7 bevorzugt und im Ausführungsbeispiel am anschlussabschnittseitigen Stirnende 14 der Außenhülse 5 angeordnet ist und zwar unmittelbar am anschlussabschnittseitigen Stirnende 14 der Außenhülse 5. Im Übrigen ist vorzugsweise und im Ausführungsbeispiel das Sollbruchelement 7 an einem über den Innenumfang der Außenhülse 5 umlaufenden Pressflansch 15 angeordnet und zwar ist das Sollbruchelement 7 dort bevorzugt sicherungsdornseitig orientiert. Nach dem Brechen bzw. Reißen des Sollbruchelementes 7 drückt die Rohrleitung 2 empfohlenermaßen und im Ausführungsbeispiel beim weiteren Aufschieben auf den Sicherungsdorn 4 mit ihrem Stirnende gegen den Pressflansch 15, so dass die Außenhülse 5 mit der Rohrleitung 2 auf den Sicherungsdorn 4 aufschiebbar bzw. weiter aufschiebbar ist. Die Rohrleitung 2 schiebt also vorzugsweise beim Aufschieben die Außenhülse 5 vor sich her.

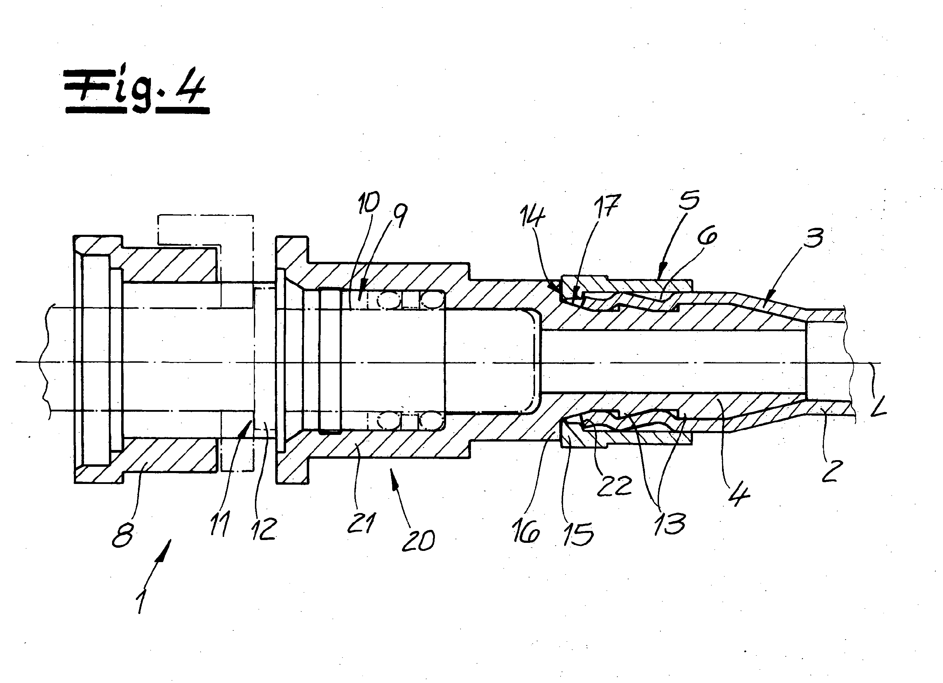

Bevorzugt und im Ausführungsbeispiel weist der Sicherungsdorn 4 an seiner Außenoberfläche zwei sägezahnförmige Sicherungsprofilierungen 13 auf. Empfohlenermaßen ist die Rohrleitung 2 kraftschlüssig auf diese Sicherungsprofilierungen 13 aufschiebbar (siehe insbesondere Fig. 4). Die Rohrleitung 2 ist hier also gleichsam zwischen der Außenhülse 5 und den Sicherungsprofilierungen 13 eingeklemmt. Vorzugsweise und im Ausführungsbeispiel weisen die sägezahnförmigen Sicherungsprofilierungen 13 jeweils einen konusförmigen Abschnitt 19 auf, wobei sich der Konus der konusförmigen Abschnitte 19 zum rohrleitungsseitigen Stirnende des Sicherungsdornes 4 hin verjüngt. Diese Ausbildung erleichtert das Aufschieben der Rohrleitung 2 auf den Sicherungsdorn 4.

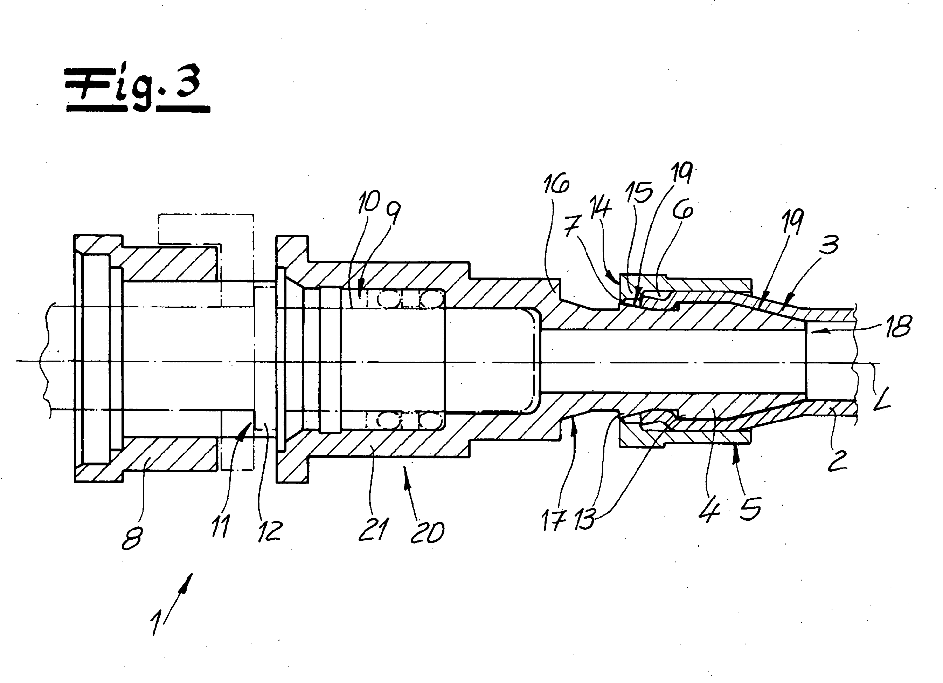

Zweckmäßigerweise und im Ausführungsbeispiel liegt die Außenhülse 5 nach dem Aufschieben auf den Sicherungsdorn 4 bzw. nach dem vollständigen Aufschieben auf den Sicherungsdorn 4 mit ihrem Stirnende an einem Anschlagflansch 16 des Schnellverbinders 1 an. Die Außenhülse 5 kommt also nach dem vollständigen Aufschieben an diesem Anschlagflansch 16 des Schnellverbinders 1 zur Anlage. Bevorzugt und im Ausführungsbeispiel läuft der Anschlagflansch 16 über den Außenumfang des Schnellverbinders 1 um. Es empfiehlt sich, dass die Anschlagfläche des Anschlagflansches 16 senkrecht zur Längsachse L des Schnellverbinders 1 angeordnet ist. Bevorzugt ist auch die Stirnendfläche des Stirnendes der Außenhülse 5 senkrecht zur Längsachse L des Schnellverbinders 1 orientiert. Der Anschlagflansch 16 ist im Übrigen empfohlenermaßen und im Ausführungsbeispiel am anschlussabschnittseitigen Ende des Sicherungsdorns 4 angeordnet. Es hat sich als vorteilhaft erwiesen, dass der Sicherungsdorn 4 einen Konusabschnitt 17 aufweist, wobei sich der Konus dieses Konusabschnittes 17 zum rohrleitungsseitigen Stirnende 18 hin verjüngt. Nach bevorzugter Ausführungsform und im Ausführungsbeispiel ist die Außenhülse 5 kraftschlüssig bzw. reibschlüssig auf den Konusabschnitt 17 aufschiebbar. Das ist insbesondere einer vergleichenden Betrachtung der Fig. 3 und 4 entnehmbar. Somit kann die Außenhülse 5 auf den Konusabschnitt 17 gleichsam aufgeklemmt werden und empfohlenermaßen liegt der Pressflansch 15 unter Vorspannung an dem Konusabschnitt 17 an. In den Figuren ist erkennbar, dass bevorzugt und im Ausführungsbeispiel der Konusabschnitt 17 des Sicherungsdornes 4 in Aufschieberichtung der Außenhülse 5 bzw. der Rohrleitung 2 vor dem Anschlagflansch 16 des Schnellverbinders 1 angeordnet ist. Zweckmäßigerweise und im Ausführungsbeispiel liegt im vollständig aufgeschobenen Zustand der Außenhülse 5 (Fig. 4) ein Stirnende 22 der Rohrleitung 2 dichtend an dem Pressflansch 15 der Außenhülse 5 an. Auf diese Weise wird ein effektiver Schutz des Rohrleitungsendes vor nachteilhaften äußeren Einflüssen, wie z. B. Spritzwasser, gewährleistet.

In den Figuren ist der Schnellverbinder 1 in Form eines Basisteils 20 dargestellt, welches Basisteil 20 den Anschlussabschnitt 8, einen Mittelabschnitt 21, den Sicherungsdorn 4 und die Außenhülse 5 aufweist. Bevorzugt und im Ausführungsbeispiel ist dieses Basisteil als einstückiges Spritzgussteil ausgebildet und wurde somit im Rahmen eines Spritzgussverfahrens hergestellt.

Vorzugsweise ist insbesondere die Außenhülse 5 vor dem Aufschieben der Rohrleitung 2 (Fig. 1) einstückig über das Sollbruchelement 7 mit dem Sicherungsdorn 4 verbunden. Wie oben bereits erläutert, bricht das Sollbruchelement 7 beim Einschieben der Rohrleitung 2 bzw. bei Beaufschlagung des Sollbruchelementes 7 mit der Rohrleitung 2.

Das in den Figuren dargestellte Basisteil 20 kann grundsätzlich auch noch mit einem nicht dargestellten Kunststoffmantel umgeben sein. Dann bildet das Basisteil 20 zusammen mit diesem Kunststoffmantel den Schnellverbinder 1. So kann beispielsweise das Basisteil 20 mit einem Kunststoff umgossen werden oder das Basisteil 20 kann auch in einem nicht dargestellten Gehäuse aufgenommen werden.

## Patentansprüche

1. Kraftfahrzeugaggregat mit einem Verbinder, insbesondere Schnellverbinder (1) und mit einer Kraftfahrzeugrohrleitung (2), wobei der Verbinder ein Einschubende (3) zum Einschieben der Rohrleitung (2) aufweist, wobei an dem Einschubende (3) ein Sicherungsdorn (4) vorhanden ist, der von einer Außenhülse (5) umgeben ist, wobei zwischen Sicherungsdorn (4) und Außenhülse (5) ein Einschubringraum (6) für die Rohrleitung (2) bzw. für ein Rohrleitungsende der Rohrleitung (2) angeordnet ist, **dadurch gekennzeichnet, dass** die Außenhülse (5) über zumindest ein Sollbruchelement (7) mit dem Sicherungsdorn (4) verbunden ist, dass das zumindest eine Sollbruchelement (7) mit der Maßgabe eingerichtet ist, dass es beim Einschieben der Rohrleitung (2) in den Einschubringraum (6) bricht, so dass die Außenhülse (5) von bzw. mit der eingeschobenen Rohrleitung (2) auf den Sicherungsdorn (4) bzw. weiter auf den Sicherungsdorn (4) aufschiebbar ist.

2. Kraftfahrzeugaggregat nach Anspruch 1, **dadurch gekennzeichnet, dass** der Verbinder bzw. Schnellverbinder (1) einen Anschlussabschnitt (8) aufweist, der mit einer Steckelementaufnahmeöffnung (9) zur Aufnahme eines Steckelementes (10) ausgestattet ist.

3. Kraftfahrzeugaggregat nach Anspruch 2, **dadurch gekennzeichnet, dass** die Steckelementaufnahmeöffnung (9) zumindest einen Rastvorsprung bzw. Rastvorsprünge (11) aufweist, welcher Rastvorsprung bzw. welche Rastvorsprünge (11) von zumindest einem Vorsprungelement (12) an der Außenoberfläche des Steckelementes (10) hintergreifbar ist.

4. Kraftfahrzeugaggregat nach einem der Ansprüche 1 bis 3, **dadurch gekennzeichnet, dass** der Sicherungsdorn (4) an seiner Außenoberfläche zumindest eine Sicherungsprofilierung (13), vorzugsweise mehrere Sicherungsprofilierungen (13) aufweist und dass die Rohrleitung (2) kraftschlüssig auf die Sicherungsprofilierung (13) bzw. auf die Sicherungsprofilierungen (13) aufschiebbar ist.

5. Kraftfahrzeugaggregat nach einem der Ansprüche 1 bis 4, **dadurch gekennzeichnet, dass** das zumindest eine Sollbruchelement (7) am anschlussabschnittseitigen Stirnende (14) der Außenhülse (5) angeordnet ist.

6. Kraftfahrzeugaggregat nach einem der Ansprüche 1 bis 5, **dadurch gekennzeichnet, dass** die Außenhülse (5) einen Pressflansch (15) aufweist, gegen den das Stirnende der Rohrleitung beim Aufschieben auf den Sicherungsdorn (4) bzw. beim weiteren Aufschieben auf den Sicherungsdorn (4) drückt, so dass die Außenhülse (5) mit der Rohrleitung (2) auf den Sicherungsdorn (4) aufschiebbar bzw. weiter aufschiebbar ist.

7. Kraftfahrzeugaggregat nach einem der Ansprüche 1 bis 6, **dadurch gekennzeichnet, dass** die Außenhülse (5) nach dem Aufschieben auf den Sicherungsdorn (4) bzw. nach dem vollständigen Aufschieben auf den Sicherungsdorn (4) mit ihrem Stirnende an einem Anschlagflansch (16) des Verbinders anliegt.

8. Kraftfahrzeugaggregat nach einem der Ansprüche 1 bis 7, **dadurch gekennzeichnet, dass** der Sicherungsdorn (4) einen Konusabschnitt (17) aufweist, wobei sich der Konus dieses Konusabschnittes (17) zum rohrleitungsseitigen Stirnende (18) des Sicherungsdorns (4) hin verjüngt und dass die Außenhülse (5) kraftschlüssig auf den Konusabschnitt (17) aufschiebbar ist.

9. Kraftfahrzeugaggregat nach Anspruch 8, **dadurch gekennzeichnet, dass** der Konusabschnitt (17) des Sicherungsdornes (4) in Aufschieberichtung der Außenhülse (5) vor dem Anschlagflansch (16) des Verbinders angeordnet ist.

10. Kraftfahrzeugaggregat nach einem der Ansprüche 8 oder 9, **dadurch gekennzeichnet, dass** die Außenhülse (5) mit ihrem Pressflansch (15) auf den Konusabschnitt (17) kraftschlüssig aufschiebbar ist.

11. Kraftfahrzeugaggregat nach einem der Ansprüche 4 bis 10, **dadurch gekennzeichnet, dass** die zumindest eine Sicherungsprofilierung (13) einen konusförmigen Abschnitt (19) aufweist bzw. wobei mehrere Sicherungsprofilierungen (13) jeweils einen konusförmigen Abschnitt (19) aufweisen und dass sich der Konus des konusförmigen Abschnittes (19) zum rohrleitungsseitigen Stirnende (18) des Sicherungsdornes (4) hin verjüngt.

12. Kraftfahrzeugaggregat nach einem der Ansprüche 1 bis 11, **dadurch gekennzeichnet, dass** die Außenhülse (5) vor dem Aufschieben der Rohrleitung (2) einstückig über das zumindest eine Sollbruchelement (7) mit dem Sicherungsdorn (4) verbunden ist.

13. Kraftfahrzeugaggregat nach einem der Ansprüche 1 bis 12, **dadurch gekennzeichnet, dass** zumindest ein Basisteil (20) des Verbinders - insbesondere mit dem Anschlussabschnitt (8), mit dem Sicherungsdorn (4) und mit der Außenhülse (5) - als ein einziges Kunststoffteil und insbesondere als ein einziges Spritzgussteil ausgebildet ist.

14. Verfahren zur Herstellung eines Kraftfahrzeugaggregates aus einem Verbinder - insbesondere Schnellverbinder (1) - und einer Kraftfahrzeugrohrleitung (2), insbesondere nach einem der Ansprüche 1 bis 13, wobei ein Basisteil (20) des Verbinders mit einem Sicherungsdorn (4) an einem Einschubende (3) und mit einer den Sicherungsdorn (4) umgebenden Außenhülse (5) hergestellt wird, wobei ein Rohrleitungsende der Rohrleitung (2) in einen zwischen Außenhülse (5) und Sicherungsdorn (4) ausgebildeten Einschubringraum (6) eingeschoben wird, **dadurch gekennzeichnet, dass** die Außenhülse (5) über zumindest ein Sollbruchelement (7) an den Sicherungsdorn (4) angeschlossen ist, dass das zumindest eine Sollbruchelement (7) beim Einschieben des Rohrleitungsendes in den Einschubringraum (6) bricht und wobei anschließend das Aggregat aus Rohrleitung (2) bzw. Rohrleitungsende und Außenhülse (5) auf den Sicherungsdorn (4) bzw. weiter auf den Sicherungsdorn (4) aufgeschoben wird.

15. Verfahren nach Anspruch 14, **dadurch gekennzeichnet, dass** das Basisteil (20) mit einem Spritzgussverfahren hergestellt wird.

## Claims

1. Vehicle unit with a connector, particularly a quick connector (1), and with a vehicle pipe (2), wherein the connector comprises an insertion end (3) for inserting the pipe (2), wherein a securing bolt (4) is present on the insertion end (3) and is surrounded by an outer sleeve (5), wherein an annular insertion space (6) is provided for the pipe (2) or for a pipe end of the pipe (2) between the securing bolt (4) and the outer sleeve (5), **characterised in that** the outer sleeve (5) is connected to the securing bolt (4) via at least one breaking element (7), that the at least one breaking element is constructed such that it necessarily breaks when the pipe (2) is inserted in the annular insertion space (6), so that the outer sleeve (5) is able to be pushed or pushed farther onto the securing bolt (4) by or with the inserted pipe (2).

2. Vehicle unit according to claim 1, **characterised in that** the connector or quick connector (1) comprises a connecting section (8), which is equipped with a plug element seating orifice (9) for receiving a plug element (10).

3. Vehicle unit according to claim 2, **characterised in that** the plug element seating orifice (9) comprises at least one detent projection or detent projections (11), which detent projection or detent projections (11) can be engaged from behind by a projection element (12) on the outer surface of the plug element (10).

4. Vehicle unit according to any one of claims 1 to 3, **characterised in that** the securing bolt (4) has at least one securing profile (13), preferably multiple securing profiles (13) on the outer surface thereof, and that the pipe (2) can be pushed onto the securing profile (13) or securing profiles (13) in force-fitting manner.

5. Vehicle unit according to any one of claims 1 to 4, **characterised in that** the at least one breaking element (7) is arranged on the connector side frontal face end (14) of the outer sleeve (5).

6. Vehicle unit according to any one of claims 1 to 5, **characterised in that** the outer sleeve (5) comprises a press-on flange (15), against which the frontal face of the pipe is pressed when it is pushed onto the securing bolt (4), or pushed farther onto the securing bolt (4), so that the outer sleeve (5) with the pipe (2) can be pushed or pushed farther onto the securing bolt (4).

7. Vehicle unit according to any one of claims 1 to 6, **characterised in that** after being pushed onto the securing bolt (4), or being pushed completely onto the securing bolt (4), the frontal face of the outer sleeve (5) lies flush against a stop flange (16) of the connector.

8. Vehicle unit according to any one of claims 1 to 7, **characterised in that** the securing bolt (4) comprises a conical section (17), wherein the cone of said conical section (17) is tapered in the direction of the pipe side frontal face end (18) of the securing bolt (4), and that the outer sleeve (5) can be pushed onto the conical section (17) in force-fitting manner.

9. Vehicle unit according to claim 8, **characterised in that** the conical section (17) of the securing bolt (4) is arranged before the stop flange (16) of the connector in the direction in which the outer sleeve (5) is pushed.

10. Vehicle unit according to either of claims 8 or 9, **characterised in that** the outer sleeve (5) with its press-on flange (15) can be pushed onto the conical section (17) in force-fitting manner.

11. Vehicle unit according to any one of claims 4 to 10, **characterised in that** the at least one securing profile (13) comprises a conical section (19) or wherein multiple securing profiles (13) each comprise a conical section (19), and that the cone of the conical section (19) is tapered in the direction of the pipe side frontal face end (18) of the securing bolt (4).

12. Vehicle unit according to any one of claims 1 to 11, **characterised in that** the outer sleeve (5) is attached integrally to the securing bolt (4) via the at least one break element (7) before the pipe (2) is pushed on.

13. Vehicle unit according to any one of claims 1 to 12, **characterised in that** at least one base part (20) of the connector - particularly with the connecting section (8), the securing bolt (4) and the outer sleeve (5) - is constructed as a single plastic part and particularly as a single injection moulded part.

14. Method for producing a vehicle unit consisting of a connector - particularly a quick connector (1) - and a vehicle pipe (2), particularly in accordance with any one of claims 1 to 13, wherein a base part (20) of the connector is produced with a securing bolt (4) on an insertion end (3) thereof and an outer sleeve (5) surrounding the securing bolt (4), wherein a pipe end of the pipe (2) is inserted into an annular insertion space (6) formed between the outer sleeve (5) and the securing bolt (4), **characterised in that** the outer sleeve (5) is connected to the securing bolt (4) via at least one breaking element (7), that the at least one breaking element (7) breaks when the pipe end is inserted in the annular insertion space (6), and wherein subsequently the unit consisting of the pipe (2) or pipe end, and the outer sleeve (5) is pushed onto the securing bolt (4) or pushed farther onto the securing bolt (4).

15. Method according to claim 14, **characterised in that** the base part (20) is produced in an injection moulding process.

## Revendications

1. Ensemble pour véhicule automobile avec un raccord, en particulier un raccord rapide (1) et avec un conduit tubulaire pour véhicule automobile (2), pour lequel le raccord présente un embout d'insertion (3) pour insertion du conduit tubulaire (2), pour lequel une broche de de fixation (4) est présente à l'embout d'insertion (3) qui est entourée d'un manchon extérieur (5), pour lequel un espace annulaire d'insertion (6) pour le conduit tubulaire (2) ou pour un embout de conduit tubulaire du conduit tubulaire (2) est disposé entre la broche de de fixation (4) et le manchon extérieur (5), **caractérisé en ce que** le manchon extérieur (5) est relié par au moins un élément de rupture (7) à la broche de de fixation (4), **en ce qu'**au moins un élément de rupture (7) est agencé dans le but qu'il se brise lors de l'insertion du conduit tubulaire (2) dans l'espace annulaire d'insertion (6) de sorte que le manchon extérieur (5) peut être enfilé sur la broche de fixation (4)ou plus loin sur la broche de fixation (4) par ou avec le conduit tubulaire (2) inséré.

2. Ensemble pour véhicule automobile selon la revendication 1, **caractérisé en ce que** le raccord ou raccord rapide (1) comporte une section de raccordement (8) qui est dotée d'une ouverture de réception d'élément enfichable (9) pour recevoir un élément enfichable (10).

3. Ensemble pour véhicule automobile selon la revendication 2, **caractérisé en ce que** l'ouverture de réception d'élément enfichable (9) comporte au moins une partie en saillie à cran ou des parties en saillie à cran (11), laquelle partie en saillie à cran ou lesquelles parties en saillie à cran (11) peut/peuvent être mise(s) en prise arrière par au moins un élément en saillie (12) sur la surface extérieure de l'élément enfichable (10).

4. Ensemble pour véhicule automobile selon l'une quelconque des revendications 1 à 3, **caractérisé en ce que** la broche de fixation (4) comporte sur sa surface extérieure au moins un profilage de fixation (13), de préférence plusieurs profilages de fixation (13) et **en ce que** le conduit tubulaire (2) peut être enfilé par force sur le profilage de fixation (13) ou sur les profilages de fixation (13).

5. Ensemble pour véhicule automobile selon l'une quelconque des revendications 1 à 4 **caractérisé en ce qu'**au moins un élément de rupture (7) est disposé sur l'extrémité avant du côté de la section de raccord (14) du manchon extérieur (5).

6. Ensemble pour véhicule automobile selon l'une quelconque des revendications 1 à 5, **caractérisé en ce que** le manchon extérieur (5) comporte une bride de compression (15) contre laquelle appuie l'extrémité avant du conduit tubulaire lors de l'enfilage sur la broche de fixation (4) ou un enfilage plus loin sur la broche de fixation (4) de sorte que le manchon extérieur (5) avec le conduit tubulaire (2) puisse être enfilé ou enfilé plus loin sur la broche de fixation (4).

7. Ensemble pour véhicule automobile selon l'une quelconque des revendications 1 à 6, **caractérisé en ce que** le manchon extérieur (5) après l'enfilage sur la broche de fixation (4) ou après l'enfilage complet sur la broche de fixation (4) vient avec son extrémité avant porter sur une bride de butée (16) du raccord.

8. Ensemble pour véhicule automobile selon l'une quelconque des revendications 1 à 7, **caractérisé en ce que** la broche de fixation (4) comporte une section conique (17), pour lequel le cône de cette section conique (17) se rétrécit vers l'extrémité avant du côté du conduit tubulaire (18) de la broche de fixation (4) et **en ce que** le manchon extérieur (5) peut être inséré par force sur la section conique (17).

9. Ensemble pour véhicule automobile selon la revendication 8, **caractérisé en ce que** la section conique (17) de la broche de fixation (4) est disposée dans la direction d'enfilage du manchon extérieur (5) avant la bride de butée (16) du raccord.

10. Ensemble pour véhicule automobile selon l'une quelconque des revendications 8 ou 9, **caractérisé en ce que** le manchon extérieur (5) peut être enfilé par force avec sa bride de compression (15) sur la section conique (17)

11. Ensemble pour véhicule automobile selon l'une quelconque des revendications 4 à 10, **caractérisé en ce que** le au moins un profilage de fixation (13) comporte une section de forme conique (19) ou pour lequel plusieurs profilages de fixation (13) comportent respectivement une section de forme conique (19) et **en ce que** le cône de la section de forme conique (19) se rétrécit vers l'extrémité avant du côté du conduit tubulaire (18) de la broche de fixation (4).

12. Ensemble pour véhicule automobile selon l'une quelconque des revendications 1 à 11, **caractérisé en ce que** le manchon extérieur (5) est relié avant l'enfilage du conduit tubulaire (2) en une seule pièce avec la broche de fixation (4) par le au moins un élément de rupture (7).

13. Ensemble pour véhicule automobile selon l'une quelconque des revendications 1 à 12, **caractérisé en ce que** la au moins une partie de base (20) du raccord, en particulier avec la section de raccord (8), avec la broche de fixation (4) et avec le manchon extérieur (5), est constituée comme une pièce en matière plastique unique et en particulier comme une pièce moulée par injection unique.

14. Procédé pour la fabrication d'un ensemble pour véhicule automobile à partir d'un raccord, en particulier un raccord rapide (1), et d'un conduit tubulaire pour véhicule automobile (2), en particulier selon l'une quelconque des revendications 1 à 13, pour lequel une partie de base (20) du raccord est fabriquée avec une broche de fixation (4) sur un embout d'insertion (3) et avec un manchon extérieur (5) entourant la broche de fixation (4), pour lequel une extrémité de conduit tubulaire du conduit tubulaire (2) est inséré dans un espace annulaire d'insertion (6) constitué entre le manchon extérieur (5) et la broche de fixation (4) **caractérisé en ce que** le manchon extérieur (5) est raccordé par au moins un élément de rupture (7) à la broche de fixation (4), **en ce qu'**au moins un élément de rupture (7) se brise lors de l'insertion de l'extrémité de conduit tubulaire dans l'espace annulaire d'insertion (6) et pour lequel ensuite l'ensemble composé du conduit tubulaire (2) ou de l'embout de conduit tubulaire et du manchon extérieur (5) est enfilé sur la broche de fixation (4) ou plus loin sur la broche de fixation (4).

15. Procédé selon la revendication 14, **caractérisé en ce que** la partie de base (20) est fabriquée avec un procédé de moulage par injection.
